# EUROPEAN PATENT SPECIFICATION

(11) **EP 3 948 916 B1**
(45) Date of publication and mention of the grant of the patent: **03.06.2026**
(21) Application number: 20785144.5
(22) Date of filing: 03.04.2020
(51) Int. Cl.: H02H 3/093, H02H 3/06, H01H 83/20

(54) **CIRCUIT BREAKER AND METHOD FOR BREAKING AN ELECTRICAL CIRCUIT**
LEISTUNGSSCHALTER UND VERFAHREN ZUM UNTERBRECHEN EINER ELEKTRISCHEN SCHALTUNG
DISJONCTEUR ET MÉTHODE POUR LA COUPURE D'UN CIRCUIT ÉLECTRIQUE

(30) Priority: 05.04.2019 SE 1950425
(43) Date of publication of application: 09.02.2022
(73) Proprietor: BLIXT TECH AB, 164 40 Kista (SE)
(72) Inventor: JOHANSSON, Jan, 171 66 SOLNA (SE)
(74) Representative: Ehrner & Delmar Patentbyrå AB
(86) International application number: PCT/SE2020/050353
(87) International publication number: WO 2020/204807

(56) References cited:
- CN-A- 102 856 135
- US-A- 4 319 182
- US-A- 4 528 494
- US-A- 4 626 698
- US-A- 4 672 301
- US-A1- 2019 103 742

## Description

### Technical Field

The invention relates to a circuit breaker for breaking an electrical circuit. Especially, the invention relates to a circuit breaker for handling inrush current as well as overload and short circuit. The invention also relates to a circuit comprising such a circuit breaker and a corresponding method.

### Background

A fuse is a device used to protect an electrical circuit from overcurrent, such as inrush current, overload and short circuit. This simple electrical device has a metal wire or metal strip that melts when too much current flows through them. Hence, the fuse only operates once and thereafter has to be replaced.

A circuit breaker on the other hand is an automatically operated electrical switch designed to protect electrical circuits from damage caused by overcurrent. The circuit breaker can be reset and therefore reused. The general idea of circuit breakers is to interrupt the current flow, i.e. to break the circuit by means of the switches, when a fault such as overcurrent is detected. The circuit breaker can be designed to protect low current circuits, and household appliances up to high voltage circuits. For example, miniature circuit breaker can be designed for rated current up to 100A whilst molded case circuit breakers can be designed for rated current up to 2 500A.

Document US 2019/103742 A1 shows a solid-state circuit interrupter and arc prevention device.

### Summary

An objective of embodiments of the invention is to provide a solution which mitigates or solves the drawbacks and problems of conventional solutions.

The above and further objectives are solved by the subject matter of the independent claims. Further advantageous embodiments of the invention can be found in the dependent claims.

According to a first aspect of the invention, the above mentioned and other objectives are achieved with a circuit breaker for breaking a circuit, the circuit breaker being arranged between a power supply and a load and comprising a first circuit breaker coupled in series with a second circuit breaker, wherein the circuit breaker comprises control means configured to switch switching means of the first circuit breaker between an ON-mode in which a current i is fed to the load, and an OFF-mode in which no current is fed to the load; wherein the control means is configured to
a) obtain a value of the current i fed to the load;
b) switch the switching means into the OFF-mode within a switching time of the first circuit breaker if the value of the current i is larger than a switching current *i_{S}* of the first circuit breaker, wherein the switching time of the first circuit breaker is less than a switching time of the second circuit breaker; and
c) switch the switching means from the OFF-mode back into the ON-mode after a first time interval *T*₁; **characterised in** that
a breaking current of the first circuit breaker is larger than a breaking current of the second circuit breaker.

The first circuit breaker can be a digital circuit breaker. The switching means of the first circuit breaker can be electronic switching means, e.g. a transistor, such as a field effect transistor (FET), which means that the switching time is much faster than the switching time of conventional circuit breakers such as for the second circuit breaker.

The control means can be any of a software solution, a hardware solution or a combination of software and hardware. For example, as a software solution the control means can be implemented in a microcontroller whilst in a hardware solution the control means can be implemented in physical logical circuits.

The switching current *i_{S}* of the first circuit breaker is a current at which the switching means is switched from the ON-mode to the OFF-mode. The switching current can be a threshold current value. In an implementation form, the switching current can be dynamically changed to different values depending on application. The dynamically change of the switching current can be controlled by a software solution a hardware solution or a combination of software and hardware.

A switching time of the first circuit breaker can be considered as a time from when a switching current of the transistor has been detected until the transistor is set in OFF-mode (not conductive anymore). The switching time can be the sum of time for detection of overcurrent (hardware limit reached) plus the switching time of the transistor into the OFF-mode. For example, the switching time of the first circuit breaker can be 250 ns or less. The switching time of the second circuit breaker can be larger than 1 ms. Hence, the switching time of the first circuit breaker is always shorter than the switching time of the second circuit breaker which also means that the first circuit breaker is faster than the second circuit breaker.

The breaking current of the first circuit breaker can be considered as the hardware limit set to protect the switching means, such as a transistor, from overcurrent. The breaking current of the second circuit breaker can be the rated current for the second circuit breaker.

An advantage of the circuit breaker according to the first aspect is that the second circuit breaker is never triggered since a breaking current of the first circuit breaker is larger than a breaking current of the second circuit breaker in contrast to prior art. Thereby, the second circuit breaker is protected from overcurrent, such as inrush current, overload and short circuit, by the first circuit breaker and will therefore never break. Further, the load is also protected from overcurrent. Moreover, due to the fact the switching means switch back from the OFF-mode into the ON-mode and if the overcurrent situation is of short duration, e.g. inrush current, the circuit will automatically operate at normal mode meaning that the load will work properly. The second circuit breaker will however act as an extra security feature if the first circuit breaker will fail.

In an implementation form of a circuit breaker according to the first aspect, the second circuit breaker is a standardized circuit breaker. Examples of such standardized circuit breaker are two pole and four pole miniature circuit breakers. An example of a standard for circuit breakers is IEC 60898-1.

With a standardised second circuit breaker the circuit breaker according to the first aspect will fulfil safety requirements set by national, regional and international governmental bodies and organisations in electrical safety.

In an implementation form of a circuit breaker according to the first aspect, the control means is further configured to
repeat steps a) to c) *N* number of times, where *N* is an integer.

Thereby, a consecutive number of inrush current instances can be handled in the alternating current (AC) case. In the direct current (DC) case capacitive load can be handled.

In an implementation form of a circuit breaker according to the first aspect, the control means is further configured to
hold the switching means in the OFF-mode during a second time interval *T*₂ if steps a) to c) have been repeated the *N* number of times.

In an implementation form of a circuit breaker according to the first aspect, the *N* number of times is equal to or less than 10.

In an implementation form of a circuit breaker according to the first aspect, the second time interval *T*₂ is larger than the first time interval *T*₁.

In an implementation form of a circuit breaker according to the first aspect, the second time interval *T*₂ is shorter than or equal to 5s.

In an implementation form of a circuit breaker according to the first aspect, the current i is alternating current and wherein the control means is further configured to
switch the switching means from the OFF-mode to the ON-mode during a zero-crossing of the AC.

Thereby, the current fed to the load will have ideal properties at restart, i.e. when the switching means is switched back to ON-mode from OFF-mode.

In an implementation form of a circuit breaker according to the first aspect, the first time interval *T*₁ is dependent on the zero-crossing of the alternating current.

In an implementation form of a circuit breaker according to the first aspect, the first time interval *T*₁ is a time interval between two consecutive zero-crossings of the alternating current.

In an implementation form of a circuit breaker according to the first aspect, the circuit breaker further comprises current monitoring means configured to
monitor a current *i* fed from the power supply to the load; and
provide a value of the monitored current *i* to the control means.

In an implementation form of a circuit breaker according to the first aspect, the current *i* is a direct current, and wherein the first time interval *T*₁ is dependent on an energy storing property of the current monitoring means.

In an implementation form of a circuit breaker according to the first aspect, the first time interval *T*₁ is longer than a threshold time interval defining when the current monitoring means has lost substantially all of its stored energy.

In an implementation form of a circuit breaker according to the first aspect, the current monitoring means is an inductor having an inherent resistance used to provide the value of the monitored current i fed from the power supply to the load.

In an implementation form of a circuit breaker according to the first aspect, the breaking current of the first circuit breaker is at least three times higher than the breaking current of the second circuit breaker.

In an implementation form of a circuit breaker according to the first aspect, the control means is configured to
set the value of the switching current *i_{S}* of the first circuit breaker.

In an implementation form of a circuit breaker according to the first aspect, the control means is further configured to
b) switch the switching means into the OFF-mode within a switching time of the first circuit breaker if the value of the current i is larger than a switching current *i_{S}* of the first circuit breaker and in dependence on the duration of the switching current *i_{S}.*

According to a second aspect of the invention, the above mentioned and other objectives are achieved with an electrical circuit comprising a power supply arranged to feed a current to a load and a circuit breaker according to the first aspect, wherein the circuit breaker is coupled between the power supply and the load.

According to a third aspect of the invention, the above mentioned and other objectives are achieved with a method for a circuit breaker being arranged between a power supply and a load and comprising a first circuit breaker coupled in series with a second circuit breaker, and further comprising switching means of the first circuit breaker, the method comprising
obtaining a value of the current *i* fed to the load;
switching the switching means into an OFF-mode, in which no current is fed to the load, within a switching time of the first circuit breaker if the value of the current *i* is larger than a switching current *i_{S}* of the first circuit breaker, wherein the switching time of the first circuit breaker is less than a switching time of the second circuit breaker; and
switching the switching means from the OFF-mode back into an ON-mode, in which a current *i* is fed to the load, after a first time interval *T*₁; **characterised in** that
a breaking current of the first circuit breaker is larger than a breaking current of the second circuit breaker.

The method according to the third aspect can be extended into implementation forms corresponding to the implementation forms of the circuit breaker according to the first aspect. Hence, an implementation form of the method comprises the feature(s) of the corresponding implementation form of the circuit breaker.

The advantages of the methods according to the third aspect are the same as those for the corresponding implementation forms of the circuit breaker according to the first aspect.

Further applications and advantages of the embodiments of the invention will be apparent from the following detailed description.

### Brief Description of the Drawings

The appended drawings are intended to clarify and explain different embodiments of the invention, in which:
- Fig. 1 shows a circuit breaker according to an embodiment of the invention;
- Fig. 2 shows a circuit breaker according to an embodiment of the invention;
- Fig. 3 shows the relation between switching time and rated current in a diagram; and
- Fig. 4 shows a flow chart of a method according to an embodiment of the invention.

### Detailed Description

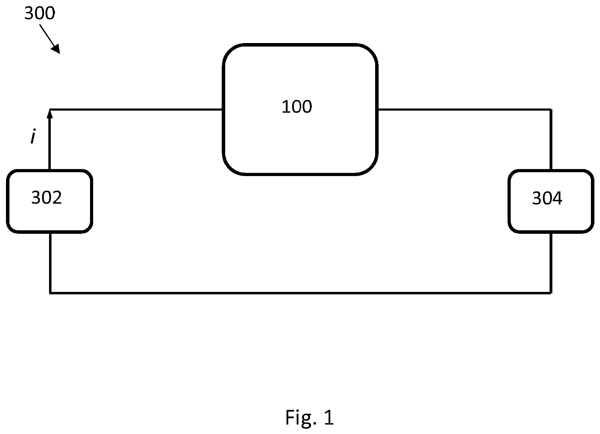

Fig. 1 shows a circuit breaker 100 according to an embodiment of the invention. The circuit breaker 100 is arranged for breaking an electrical circuit 300 such that no current can reach at least one electrical load 304. Therefore, the electrical circuit 300 comprises at last one power supply 302 arranged to supply a current *i* (or a corresponding voltage) to at least one load 304 which means that the power supply 302 is electrically coupled to the load 304. Examples of loads 304 are household appliances but are not limited thereto. Hence, a load in this context relate to an electrical device arranged to consume electrical power for its functioning. The power supply 302 is arranged to supply an alternating current (AC) current or a direct current (DC) depending on application. The supplied current can e.g. be mains current with nominal voltage of 110V or 220V and with a frequency of 50Hz. However, the invention is not limited thereto and hence embodiments of the invention can be applied from all types of voltage systems, from low voltage systems to high voltage systems.

A circuit breaker 100 according to embodiments of the invention is coupled between the power supply 302 and the load 304 as shown in Fig. 1. When the circuit breaker 100 breaks the circuit 300 no current *i* can reach the load 304. In this respect the circuit breaker 100 comprises switching means 106 arranged to be controlled by control means 104. The switching means 106 is arranged to switch between an ON-mode, in which a current *i* from the power supply 302 is fed to the load 304, and an OFF-mode, in which no current is fed to the load 304. The switching means 106 hence act as switches closing or opening the circuit. The control means 104 can e.g. be a digital microcontroller but is not limited thereto.

The control means 104 is configured to obtain a value of the current which is supplied by the power supply and fed to the load 304 and based on the obtained value of the current the control means 104 controls the switching means 106 accordingly. More specifically, the control means 104 herein is configured to: a) obtain a value of the current *i* fed to the load 304; b) switch the switching means 106 into the OFF-mode within a switching time of the first circuit breaker 102 if the value of the current *i* is larger than a switching current *i_{S}* of the first circuit breaker 102, wherein the switching time of the first circuit breaker 102 is less than a switching time of the second circuit breaker 112; and c) switch the switching means 106 from the OFF-mode back into the ON-mode after a first time interval *T*₁.

In embodiments of the invention, the control means 104 is further configured to repeat steps a) to c) *N* number of times, where *N* is a positive integer. Hence, the circuit breaker 100 can according to this embodiment repeat the steps a) to c) a predetermined number of times. If the current *i* fed to the load 304 is less than the switching current *i_{S}* of the first circuit breaker during one of the repetitions the switching means can be kept in the ON-mode.

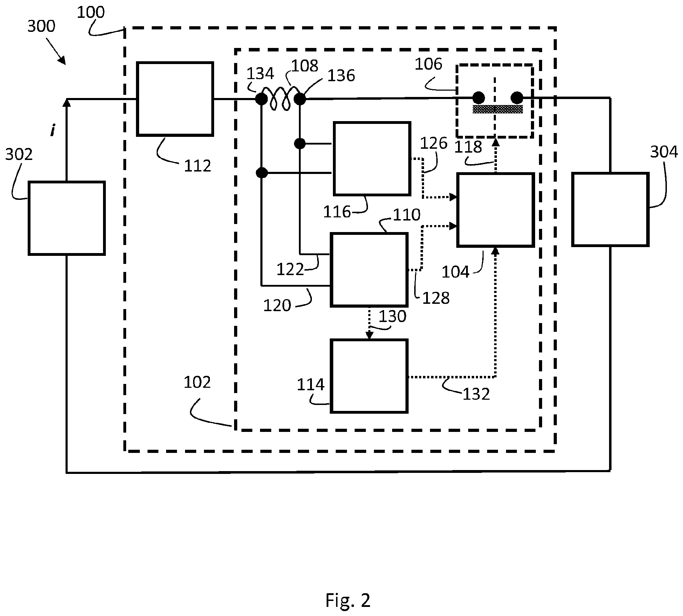

Fig. 2 shows a circuit breaker 100 according to a further embodiment of the invention. The circuit breaker 100 in Fig. 2 is shown in more detail compared to the one in Fig. 1. As shown in Fig. 2 the circuit breaker 100 is illustrated with dashed lines and comprises a first circuit breaker 102 coupled in series with a second circuit breaker 112, and where the first circuit breaker 102 and the second circuit breaker 112 together are coupled between the power supply 302 and the load 304. In embodiments the second circuit breaker 112 is a so called standardized circuit breaker, such as a fuse, a two or four pole miniature circuit breaker or any other suitable standardized circuit breaker.

The circuit breaker 100 further comprises current monitoring means 108 configured to continuously monitor the current *i* fed from the power supply 302 to the load 304, and to provide the value of the monitored current *i* to the control means 104 through signal coupling 120 and 122 via a threshold detector 110. The monitoring can be performed by the current monitoring means 108 configured to continuously measuring the current fed by the power supply and provide the measured values of the current to the threshold detector 110. In the threshold detector 110 both switching current and breaking current is checked. If the measured valued is larger than a threshold value for the switching current the threshold detector 110 triggers the control means 104 through signal coupling 128 which results in that the control means 104 switches the switching means from ON-mode into OFF-mode through control interface 118. The threshold detector 110 is hence configured to trigger the control means 104 when the measured value of the current is larger than the switching current of the first circuit breaker 102. If however, the measured current is larger than the breaking current of the first circuit breaker 102 the control means will immediately switch the switching means into the OFF-mode so that to components in the circuit breaker is not harmed.

In embodiments of the invention, the current monitoring means 108 is an inductor such as a coil as illustrated in Fig. 2. The function of the coil is to delay overcurrent so that the switching means can be set to OFF-mode before electrical components are damaged. The coil has two measurement nodes 134 and 136 which are arranged on different sides of the inductive section of the coil. Hence, both a zero-crossing detector 116 and a threshold detector 110 are in this embodiment arranged to measure the current at the measurement nodes 134 and 136 of the coil. In other words, the current monitoring means 108, or in this case the coil, is connected to zero-crossing detector 116 via coupling 120 to measurement node 134 and coupling 122 to measurement node 136. The zero-crossing detector 116 is herein configured to detect zero-crossings if the current fed from the power supply 302 is AC. Therefore, the zero-crossing detector 116 indicates zero-crossings to the control means 104 through signal means 126 so that the control means 104 can switch back the switching means to ON-mode at a zero-crossing. This means that the zero-crossing detector 116 is only relevant for the AC case.

Fig. 2 also shows delay block 114 which is arranged to provide correct time delays to the control means 104 through signal means 132. For example, in the DC case the first time interval *T*₁ in embodiments is longer than a threshold time interval defining when the current monitoring means 108 has lost substantially all of its stored energy. Hence, in this case the first time interval *T*₁ can be provided to the control means as a delay by the delay block 114. Therefore, the threshold detector 110 can trigger/notify the delay block 114 through signal means 130.

In further embodiments of the invention, a breaking current of the first circuit breaker 102 is larger than the breaking current of the second circuit breaker 112. The breaking current *i*_{*Br*1} of the first circuit breaker 102 is in embodiments at least three times higher than the breaking current of the second circuit breaker 112. For digital circuit breakers the capability of the transistor (switch of the circuit breaker, i.e. in this case the switching means) to handle peak currents sets the hardware limit for the breaking current.

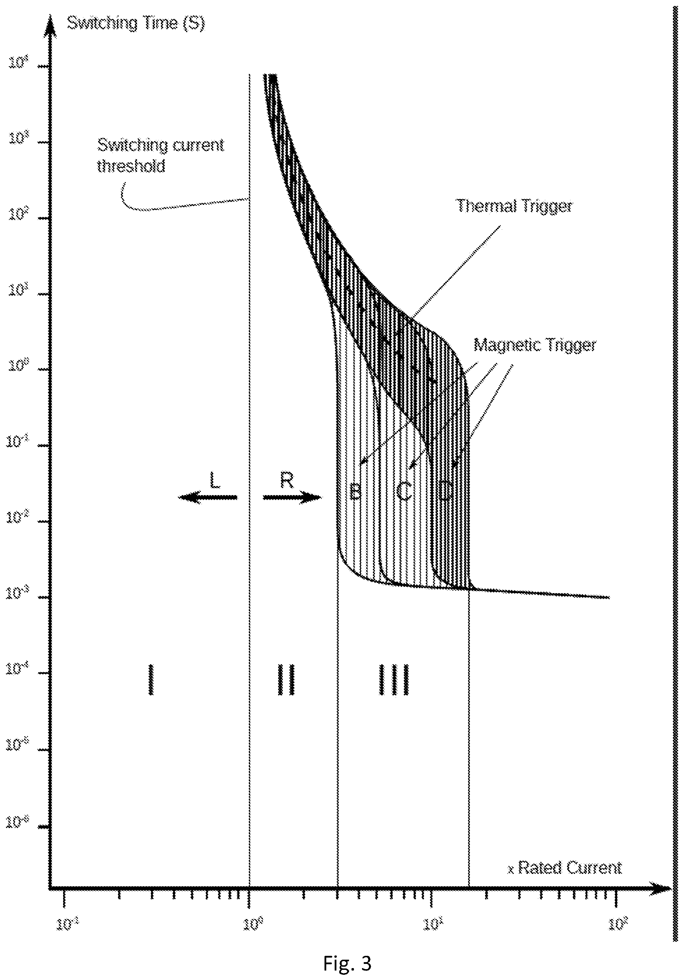

Furthermore, in yet further embodiments of the invention, the second circuit breaker 112 is integrated with the first circuit breaker 102, e.g. arranged inside the same housing or on a common PCB. In one case a metal strip corresponding to a fuse is arranged in the common PCB and acts as a second circuit breaker 112. The metal strip would correspond to the thermal trigger of a MCB, see Fig. 3.

Furthermore, Fig. 3 shows the relation between switching time and rated current in a diagram. The x-axis shows the rated current (times "x" the nominal value given) and the y-axis shows the switching time in seconds. The magnetic trigger zones marked B, C and D in Fig. 3 relate to different standardised rated overcurrent for miniature circuit breakers (MCBs). The thermal trigger zone on the other hand relates to heat generated by the energy (i.e. current*time) generated in the MCB.

The vertical line marked "switching current threshold" demarks zone I and II in Fig. 3. Zone I relates to a software defined current limit in relation to the switching current threshold (SCT), and Zone II relates to software defined overcurrent limit in relation to the switching current threshold. In embodiments of the invention, the SCT can be changed or set and controlled by software. This is illustrated with the right R arrow and left L arrow in Fig. 3. This means that when a measured current is over a current SCT the software e.g. in a microcontroller can decide to raise the SCT so that no switching is performed if it is decided that the measured current is not harmful to the circuit breaker itself or to the load. Hence, this situation arises when the measured current is above the current SCT but below the breaking current of the first circuit breaker 102. The reverse case can also happen, i.e. that the SCT is lowered. For example, to save cost (lower tariff) the maximum rated current can be lowered by lowering the SCT. Zone III in Fig. 3 on the other hand relates to hardware defined overcurrent limit which is the same as the breaking current.

As previously stated, embodiments of the invention may relate to a circuit comprising an AC power supply, a DC power supply, or both an AC power supply and a DC power supply. In the following disclosure the different cases of AC and DC will be described more in detail.

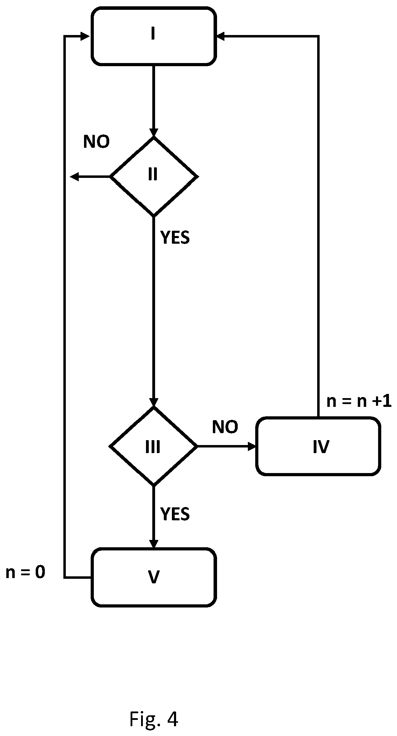

Fig. 4 shows a flow chart of a method according to the invention which also discloses further embodiments of the invention. Further, the AC and DC cases are also described with reference to Fig. 4. It is to be noted the different embodiments described in Fig. 4 also are applicable to corresponding embodiments of the circuit breaker, i.e. to corresponding embodiments of the circuit breaker device and are not limited to the method.

In step I in Fig. 4, the current fed by the power supply to the load is continuously measured or monitored. In embodiments of the invention, the current is monitored with the use of current monitoring means 108 as previously described.

In step II in Fig. 4, it is checked if the measured current is higher than a threshold current of the first circuit breaker, i.e. a switching current. If NO in step II, i.e. the measured current is below the threshold current, the method returns back to step I and continues to measure the current fed by the power supply 302. If however YES in step II, i.e. the measured current is higher than the threshold current, the method continues to step III.

In step III in Fig. 4, it is checked if a maximum number of consecutive overcurrent detections (e.g. inrush current) *n* has been reached, where *n* is a counter value indicating the number of consecutive overcurrent detected. If YES in step III this is the same as if the measured current has been higher than the threshold current *N* number of times. If NO in step III the method continues to step IV else if YES in step III the method continues to step V. In embodiments of the invention, *N* is equal to or less than 10.

In step IV in Fig. 4, i.e. determined NO in step III, the first circuit breaker breaks the circuit by switching the switching means into OFF-mode during a first time interval *T*₁ and thereafter switched back to ON-mode. The counter *n* is incremented with value 1, i.e. *n* = *n* + 1 and the method returns back to step I.

In the AC case when the power supply feds AC to the load, *T*₁ is so designed that the switching means is switched back to ON-mode at a zero-crossing according to embodiments of the invention. Hence, the first time interval *T*₁ is dependent on the zero-crossing of the AC current. The first time interval *T*₁ is e.g. a time interval between two consecutive zero-crossings of the AC current and therefore the next zero-crossing after overcurrent detected. It is noted that the first time interval *T*₁ can vary between consecutive detected overcurrent. Hence, the first time interval *T*₁ can be designed for optimal performance.

In the DC case when the power supply feds DC to the load 304 the first time interval *T*₁ is dependent on an energy storing property of the current monitoring means 108 according to embodiments of the invention. As previously mentioned, said current monitoring means 108 may be an inductor, such as a coil, having an inherent resistance configured to provide the value of the monitored current *i* fed from the power supply 302 to the load 304. Hence, in embodiments the first time interval *T*₁ is longer than a threshold time interval defining when the current monitoring means 108 has lost substantially all of its stored energy in the DC case.

In step V in Fig. 4, i.e. YES in step III, first circuit breaker 102 breaks the circuit by switching the switching means into OFF-mode during a second time interval *T*₂, where *T*₂ is larger than *T*₁. i.e. *T*₂ > *T*₁*.* The counter *n* is also reset to zero, i.e. *n* = 0 and the method returns back to step I.

In the AC case *T*₂ is so designed that the switching means is switched back to ON-mode at a zero-crossing after a consecutive number of zero-crossings according to embodiments of the invention.

In embodiments of the invention, *T*₂ is designed to be shorter than or equal to 5s both in the AC and the DC case due to the human perception of electrical fail situations. It is however noted that the parameter *T*₂ can be designed to other values. Hence, the parameter *T*₂ can in embodiments be dynamically adapted to different applications.

## Claims

1. A circuit breaker (100) for breaking a circuit (300), the circuit breaker (100) being adapted to be arranged between a power supply (302) and a load (304) and comprising a first circuit breaker (102) coupled in series with a second circuit breaker (112), wherein the circuit breaker (100) comprises control means (104) configured to switch switching means (106) of the first circuit breaker (102) between an ON-mode in which a current *i* is fed to the load (304), and an OFF-mode in which no current is fed to the load (304); wherein the control means (104) is configured to
a) obtain a value of the current i fed to the load (304);
b) switch the switching means (106) into the OFF-mode within a switching time of the first circuit breaker (102) if the value of the current *i* is larger than a switching current *i_{S}* of the first circuit breaker (102), wherein the switching time of the first circuit breaker (102) is less than a switching time of the second circuit breaker (112); and
c) switch the switching means (106) from the OFF-mode back into the ON-mode after a first time interval *T*₁; **characterised in that**
a breaking current of the first circuit breaker (102) is larger than a breaking current of the second circuit breaker (112).

2. The circuit breaker (100) according to claim 1, wherein the control means (104) is further configured to
repeat steps a) to c) *N* number of times, where *N* is an integer.

3. The circuit breaker (100) according to claim 2, wherein the control means (104) is further configured to
hold the switching means (106) in the OFF-mode during a second time interval *T*₂ if steps a) to c) have been repeated the *N* number of times.

4. The circuit breaker (100) according to claim 3, wherein the second time interval *T*₂ is larger than the first time interval *T*₁.

5. The circuit breaker (100) according to anyone of the preceding claims, wherein the current i is alternating current and wherein the control means (104) is further configured to
switch the switching means (106) from the OFF-mode to the ON-mode during a zero-crossing of the alternating current.

6. The circuit breaker (100) according to claim 5, wherein the first time interval *T*₁ is dependent on the zero-crossing of the alternating current.

7. The circuit breaker (100) according to claim 6, wherein the first time interval *T*₁ is a time interval between two consecutive zero-crossings of the alternating current.

8. The circuit breaker (100) according to anyone of the preceding claims, wherein the circuit breaker (100) further comprises current monitoring means (108) configured to
monitor a current *i* fed from the power supply (302) to the load (304); and
provide a value of the monitored current *i* to the control means (104).

9. The circuit breaker (100) according to claim 8, wherein the current *i* is a direct current, and wherein the first time interval *T*₁ is dependent on an energy storing property of the current monitoring means (108).

10. The circuit breaker (100) according to claim 9, wherein the first time interval *T*₁ is longer than a threshold time interval defining when the current monitoring means (108) has lost substantially all of its stored energy.

11. The circuit breaker (100) according to anyone of claims 8 to 10, wherein the current monitoring means (108) is an inductor having an inherent resistance configured to provide the value of the monitored current i fed from the power supply (302) to the load (304).

12. The circuit breaker (100) according to any one of the preceding claims, wherein the control means (104) further is configured to
set the value of the switching current *i_{S}* of the first circuit breaker (102).

13. The circuit breaker (100) according to any one of the preceding claims, wherein the control means (104) further is configured to
b) switch the switching means (106) into the OFF-mode within a switching time of the first circuit breaker (102) if the value of the current *i* is larger than a switching current *i_{S}* of the first circuit breaker (102) and in dependence on at least one of a duration of the switching current *i_{S}* and a duration until the switching current *i_{S}* is reached.

14. A method for a circuit breaker (100) being arranged between a power supply (302) and a load (304) and comprising a first circuit breaker (102) coupled in series with a second circuit breaker (112), and further comprising switching means (106) of the first circuit breaker (102), the method comprising
obtaining a value of the current *i* fed to the load (304);
switching the switching means (106) into an OFF-mode, in which no current is fed to the load (304), within a switching time of the first circuit breaker (102) if the value of the current *i* is larger than a switching current *i_{S}* of the first circuit breaker (102), wherein the switching time of the first circuit breaker (102) is less than a switching time of the second circuit breaker (112); and
switching the switching means (106) from the OFF-mode back into an ON-mode, in which a current *i* is fed to the load (304), after a first time interval *T*₁; **characterised in that**
a breaking current of the first circuit breaker (102) is larger than a breaking current of the second circuit breaker (112).

## Patentansprüche

1. Leistungsschalter (100) zum Unterbrechen einer Schaltung (300), wobei der Leistungsschalter (100) dafür ausgelegt ist, zwischen einer Leistungsversorgung (302) und einer Last (304) angeordnet zu werden, und einen ersten Leistungsschalter (102) umfasst, der in Reihe mit einem zweiten Leistungsschalter (112) geschaltet ist, wobei der Leistungsschalter (100) Steuermittel (104) umfasst, die konfiguriert sind, Schaltmittel (106) des ersten Leistungsschalters (102) zwischen einem EIN-Modus, in dem der Last (304) ein Strom i zugeführt wird, und einem AUS-Modus, in dem der Last (304) kein Strom zugeführt wird, umzuschalten; wobei die Steuermittel (104) konfiguriert sind,
a) einen Wert des Stroms i, der der Last (304) zugeführt wird, zu erhalten;
b) die Schaltmittel (106) innerhalb einer Schaltzeit des ersten Leistungsschalters (102) in den AUS-Modus umzuschalten, wenn der Wert des Stroms i größer ist als ein Schaltstrom i_{S} des ersten Leistungsschalters (102), wobei die Schaltzeit des ersten Leistungsschalters (102) kleiner ist als eine Schaltzeit des zweiten Leistungsschalters (112); und
c) die Schaltmittel (106) nach einem ersten Zeitintervall T₁ von dem AUS-Modus zurück in den EIN-Modus zu schalten; **dadurch gekennzeichnet, dass**:
ein Ausschaltstrom des ersten Leistungsschalters (102) größer ist als ein Ausschaltstrom des zweiten Leistungsschalters (112).

2. Leistungsschalter (100) nach Anspruch 1, wobei die Steuermittel (104) ferner konfiguriert sind,
die Schritte a) bis c) N mal zu wiederholen, wobei N eine ganze Zahl ist.

3. Leistungsschalter (100) nach Anspruch 2, wobei die Steuermittel (104) ferner konfiguriert sind,
die Schaltmittel (106) während eines zweiten Zeitintervalls T₂ in dem AUS-Modus zu halten, wenn die Schritte a) bis c) N mal wiederholt worden sind.

4. Leistungsschalter (100) nach Anspruch 3, wobei das zweite Zeitintervall T₂ größer ist als das erste Zeitintervall T₁.

5. Leistungsschalter (100) nach einem der vorhergehenden Ansprüche, wobei der Strom i ein Wechselstrom ist und wobei die Steuermittel (104) ferner konfiguriert sind,
die Schaltmittel (106) während eines Nulldurchgangs des Wechselstroms von dem AUS-Modus in den EIN-Modus umzuschalten.

6. Leistungsschalter (100) nach Anspruch 5, wobei das erste Zeitintervall T₁ vom Nulldurchgang des Wechselstroms abhängig ist.

7. Leistungsschalter (100) nach Anspruch 6, wobei das erste Zeitintervall T₁ ein Zeitintervall zwischen zwei aufeinander folgenden Nulldurchgängen des Wechselstroms ist.

8. Leistungsschalter (100) nach einem der vorhergehenden Ansprüche, wobei der Leistungsschalter (100) ferner Stromüberwachungsmittel (108) umfasst, die konfiguriert sind,
einen Strom i, der der Last (304) von der Leistungsversorgung (302) zugeführt wird, zu überwachen; und
einen Wert des überwachten Stroms i den Steuermitteln (104) bereitzustellen.

9. Leistungsschalter (100) nach Anspruch 8, wobei der Strom i ein Gleichstrom ist, und wobei das erste Zeitintervall T₁ von einer Energiespeichereigenschaft der Stromüberwachungsmittel (108) abhängig ist.

10. Leistungsschalter (100) nach Anspruch 9, wobei das erste Zeitintervall T₁ länger ist als ein Schwellenzeitintervall, das definiert, wann die Stromüberwachungsmittel (108) im Wesentlichen ihre gesamte gespeicherte Energie verloren haben.

11. Leistungsschalter (100) nach einem der Ansprüche 8 bis 10, wobei die Stromüberwachungsmittel (108) eine Induktivität sind, die einen Eigenwiderstand aufweist, der konfiguriert ist, den Wert des überwachten Stroms i, der der Last (304) von der Leistungsversorgung (302) zugeführt worden ist, bereitzustellen.

12. Leistungsschalter (100) nach einem der vorhergehenden Ansprüche, wobei die Steuermittel (104) ferner konfiguriert sind,
den Wert des Schaltstroms i_{S} des ersten Leistungsschalters (102) einzustellen.

13. Leistungsschalter (100) nach einem der vorhergehenden Ansprüche, wobei die Steuermittel (104) ferner konfiguriert sind,
b) die Schaltmittel (106) innerhalb einer Umschaltzeit des ersten Leistungsschalters (102) in den AUS-Modus umzuschalten, wenn der Wert des Stroms i größer ist als ein Schaltstrom i_{S} des ersten Leistungsschalters (102), und in Abhängigkeit von einer Dauer des Schaltstroms i_{S} und/oder einer Dauer bis zum Erreichen des Schaltstroms i_{S}.

14. Verfahren für einen Leistungsschalter (100) der zwischen einer Leistungsversorgung (302) und einer Last (304) angeordnet ist und einen ersten Leistungsschalter (102) umfasst, der in Reihe mit einem zweiten Leistungsschalter (112) geschaltet ist und ferner Schaltmittel (106) des ersten Leistungsschalters (102) umfasst, wobei das Verfahren Folgendes umfasst:
Erhalten eines Wertes des Stroms i, der der Last (304) zugeführt wird;
Umschalten der Schaltmittel (106) in einen AUS-Modus, in dem der Last (304) kein Strom zugeführt wird, innerhalb einer Schaltzeit des ersten Leistungsschalters (102), wenn der Wert des Stroms i größer ist als ein Schaltstrom i_{S} des ersten Leistungsschalters (102), wobei die Schaltzeit des ersten Leistungsschalters (102) kleiner ist als eine Schaltzeit des zweiten Leistungsschalters (112); und
Umschalten der Schaltmittel (106) von dem AUS-Modus zurück in den EIN-Modus, in dem der Last (304) ein Strom i zugeführt wird, nach einem ersten Zeitintervall T₁;
**dadurch gekennzeichnet, dass**
ein Ausschaltstrom des ersten Leistungsschalters (102) größer ist als ein Ausschaltstrom des zweiten Leistungsschalters (112).

## Revendications

1. Disjoncteur (100) de coupure d'un circuit (300), le disjoncteur (100) étant conçu pour être agencé entre une alimentation (302) et une charge (304) et comprenant un premier disjoncteur (102) couplé en série avec un deuxième disjoncteur (112), dans lequel le disjoncteur (100) comprend un moyen de commande (104) configuré pour commuter un moyen de commutation (106) du premier disjoncteur (102) entre un mode ACTIF dans lequel un courant i est fourni à la charge (304), et un mode INACTIF dans lequel aucun courant n'est fourni à la charge (304) ; dans lequel le moyen de commande (104) est configuré pour
a) obtenir une valeur du courant i fourni à la charge (304) ;
b) commuter le moyen de commutation (106) dans le mode INACTIF au cours d'un temps de commutation du premier disjoncteur (102) si la valeur du courant i est supérieure à un courant de commutation i_{S} du premier disjoncteur (102), dans lequel le temps de commutation du premier disjoncteur (102) est inférieur à un temps de commutation du deuxième disjoncteur (112) ; et
c) commuter le moyen de commutation (106) du mode INACTIF au mode ACTIF après un premier intervalle de temps T₁ ; **caractérisé en ce que**
un courant de coupure du premier disjoncteur (102) est supérieur à un courant de coupure du deuxième disjoncteur (112).

2. Disjoncteur (100) selon la revendication 1, dans lequel le moyen de commande (104) est en outre configuré pour
répéter les étapes a) à c) N nombre de fois, où N est un nombre entier.

3. Disjoncteur (100) selon la revendication 2, dans lequel le moyen de commande (104) est en outre configuré pour
maintenir le moyen de commutation (106) en mode INACTIF pendant un deuxième intervalle de temps T₂ si les étapes a) à c) ont été répétées le N nombre de fois.

4. Disjoncteur (100) selon la revendication 3, dans lequel le deuxième intervalle de temps T₂ est supérieur au premier intervalle de temps T₁.

5. Disjoncteur (100) selon l'une quelconque des revendications précédentes, dans lequel le courant i est un courant alternatif et dans lequel le moyen de commande (104) est en outre configuré pour
commuter le moyen de commutation (106) du mode INACTIF au mode ACTIF pendant un passage par zéro du courant alternatif.

6. Disjoncteur (100) selon la revendication 5, dans lequel le premier intervalle de temps T₁ dépend du passage par zéro du courant alternatif.

7. Disjoncteur (100) selon la revendication 6, dans lequel le premier intervalle de temps T₁ est un intervalle de temps entre deux passages par zéro consécutifs du courant alternatif.

8. Disjoncteur (100) selon l'une quelconque des revendications précédentes, dans lequel le disjoncteur (100) comprend en outre un moyen de surveillance de courant (108) configuré pour
surveiller un courant i fourni par l'alimentation (302) à la charge (304) ; et
fournir une valeur du courant i surveillé au moyen de commande (104).

9. Disjoncteur (100) selon la revendication 8, dans lequel le courant i est un courant continu, et dans lequel le premier intervalle de temps T₁ dépend d'une propriété de stockage d'énergie du moyen de surveillance de courant (108).

10. Disjoncteur (100) selon la revendication 9, dans lequel le premier intervalle de temps T₁ est plus long qu'un intervalle de temps seuil définissant le moment où le moyen de surveillance de courant (108) a perdu sensiblement toute son énergie stockée.

11. Disjoncteur (100) selon l'une quelconque des revendications 8 à 10, dans lequel le moyen de surveillance de courant (108) est une bobine d'inductance ayant une résistance inhérente configurée pour fournir la valeur du courant i surveillé fourni par l'alimentation (302) à la charge (304).

12. Disjoncteur (100) selon l'une quelconque des revendications précédentes, dans lequel le moyen de commande (104) est en outre configuré pour régler la valeur du courant de commutation i_{S} du premier disjoncteur (102).

13. Disjoncteur (100) selon l'une quelconque des revendications précédentes, dans lequel le moyen de commande (104) est en outre configuré pour b) commuter le moyen de commutation (106) dans le mode INACTIF au cours d'un temps de commutation du premier disjoncteur (102) si la valeur du courant i est supérieure à un courant de commutation i_{S} du premier disjoncteur (102) et en fonction d'au moins une parmi une durée du courant de commutation i_{S} et une durée jusqu'à atteindre le courant de commutation i_{S}.

14. Procédé pour un disjoncteur (100) agencé entre une alimentation (302) et une charge (304) et comprenant un premier disjoncteur (102) couplé en série avec un deuxième disjoncteur (112), et comprenant en outre un moyen de commutation (106) du premier disjoncteur (102), le procédé comprenant
l'obtention d'une valeur du courant i fourni à la charge (304) ;
la commutation du moyen de commutation (106) dans un mode INACTIF, dans lequel aucun courant n'est fourni à la charge (304), au cours d'un temps de commutation du premier disjoncteur (102) si la valeur du courant i est supérieure à un courant de commutation i_{S} du premier disjoncteur (102), dans lequel le temps de commutation du premier disjoncteur (102) est inférieur à un temps de commutation du deuxième disjoncteur (112) ; et
la commutation, à nouveau, du moyen de commutation (106) du mode INACTIF à un mode ACTIF, dans lequel un courant i est fourni à la charge (304), après un premier intervalle de temps T₁ ; **caractérisé en ce que** un courant de coupure du premier disjoncteur (102) est supérieur à un courant de coupure du deuxième disjoncteur (112).
